# EUROPÄISCHE PATENTSCHRIFT

(11) **EP 4 404 551 B1**
(45) Veröffentlichungstag und Bekanntmachung des Hinweises auf die Patenterteilung: **22.07.2026**
(21) Anmeldenummer: 23152886.0
(22) Anmeldetag: 23.01.2023
(51) Int. Cl.: H04N 1/401, H04N 1/60

(54) **VERFAHREN ZUR INLINE-ÜBERWACHUNG DER FUNKTIONSWEISE VON MINDESTENS EINEM DRUCKKOPF**
METHOD FOR INLINE MONITORING THE OPERATION OF AT LEAST ONE PRINTHEAD
PROCÉDÉ DE SURVEILLANCE EN LIGNE DU FONCTIONNEMENT D'AU MOINS UNE TÊTE D'IMPRESSION

(43) Veröffentlichungstag der Anmeldung: 24.07.2024
(73) Patentinhaber: Fritz Egger GmbH & Co. OG, 6380 St. Johann in Tirol (AT)
(72) Erfinder: Bergmann, Bernd, 30900 Wedemark (DE)
(74) Vertreter: Cohausz & Florack

(56) Entgegenhaltungen:
- EP-A1- 3 578 939
- DE-B3- 102018 201 785
- US-A1- 2016 031 252

## Beschreibung

Die Erfindung betrifft ein Verfahren zur Inline-Überwachung der Funktionsweise von mindestens einem Druckkopf.

In der Druckindustrie ist eines der wesentlichen Ziele die Erzeugung möglichst gleicher Bild- und Farbeneindrücke der zu bedruckenden Materialien. Die sogenannte Farbkonstanz auch beim Druck unterschiedlicher Chargen auf unterschiedlichen Trägermaterialien soll möglichst immer gleich aussehen. Dies gilt insbesondere dann, wenn Corporate Identity gewünscht ist. Die von einer Firma gewählte Farbe bzw. die gewählten Farben sollen immer gleich aussehen, unabhängig davon, ob auf Glas, Papier, Kunststoff oder einem anderen Trägermaterial gedruckt wird. Das möglichst identische Aussehen der Druckprodukte ist gewünscht und somit ein Ziel der Druckindustrie.

Druckverfahren, Drucker, Druckfarbe und vor allem das Trägermaterial haben einen großen Einfluss darauf, wie ein Druckergebnis, das auf der Basis einer Druckdatei gedruckt worden ist, im ausgedruckten Zustand aussieht. Unter Druckfarbe wird jedes Druckmedium unter anderem wie Tinte oder Toner verstanden, mit dem Farbpigmente auf das Trägermaterial aufgebracht werden.

Während des industriellen Druckens, sei es im Single-Pass-Betrieb mit feststehendem Druckkopf und sich bewegenden Trägermaterial oder im Multi-Pass-Betrieb mit sich bewegendem Druckerkopf bei feststehendem Trägermaterial, ist es zur Einhaltung der vorgegebenen Farbkonstanz erforderlich, die Funktionsweise des zumindest einen Druckkopfes, insbesondere aller der eingesetzten Druckköpfe, zu überprüfen.

Eine lokale Veränderung im Drucksystem, bei der sich ein gesamter Druckkopf oder ein Teilbereich (Segment) eines Druckkopfes im Druckverhalten verändert hat, führt zu einem streifigen Druckbild. Diese Streifenbildung im Druckbild wird auch als Banding bezeichnet.

Eine Änderung der Einstellung des Druckers und somit eine mögliche Korrektur des Druckbildes kann nicht durch Änderungen an der Druckdatei, sei es automatisch oder manuell, korrigiert werden. Denn diese Änderungen wirken global über den kompletten Bildbereich, da entweder das Ausgabeprofil (ICC-Profil) oder die Eingangsdatei für das Color-Management verändert werden müssen.

Daher ist es sinnvoll den Drucker in regelmäßigen Abständen zu überprüfen, ob jede Farbe homogen über die gesamte Druckbreite gedruckt werden kann und gegebenenfalls eine Banding-Korrektur durchzuführen.

Zur Banding-Korrektur werden spezielle Testformen angedruckt und analysiert, die so aufgebaut sind, dass für jede einzelne Druckfarbe in verschiedenen Intensitätsabstufungen Bereiche enthalten sind, die sich homogen über die gesamte Druckbreite erstrecken. Ein streifiger Druck durch das Banding lässt sich so einfach und schnell erkennen und ermöglicht es entsprechende Gegenmaßnahmen zu ergreifen (Reinigen, Druckkopf oder Druckkopfsegmentspannungen zu verändern). Wurden Gegenmaßnahmen eingeleitet, wird die Testform erneut angedruckt, um den Erfolg der Maßnahmen zu kontrollieren. Dieser Ablauf wird so lange wiederholt, bis die geforderte Qualität erreicht ist.

Eine Banding-Korrektur ist daher aufwändig und unterbricht den fortlaufenden Druckvorgang. Die beschriebene Banding-Korrektur wird daher nur in größeren, zum Teil zu großen Zeitabständen durchgeführt.

Die DE 10 2018 201 785 B3 offenbart ein Verfahren zur Detektion und Kompensation von defekten Druckdüsen in einer Inkjet-Druckmaschine, wobei ein Testmuster in Form eines gestauchten Druckbildes verwendet wird.

Die US 2016/0031252 A1 offenbart ein Verfahren zum Überwachen eines Drucksystems, bei dem ein auf den Druckdaten basierendes und unterschiedliche räumliche Auflösungen in einer ersten und einer zweiten Richtung aufweisender Überprüfungsdatensatz als Testmuster eingesetzt wird.

Die EP 3 578 939 A1 offenbart ein Verfahren zu Online-Qualitätskontrolle von Dekordrucken auf Trägermaterialien, bei dem zunächst ein hyperspektral gemessenes Referenzbild erzeugt und als SOLL-Bild in einem digitalen Format gespeichert wird. Im laufenden Druckverfahren werden dann digitale IST-Bilder vom Druckbild mit einer herkömmlichen Aufnahmetechnik erzeugt und mit dem SOLL-Bild verglichen.

Daher liegt der vorliegenden Erfindung das technische Problem zugrunde, ein Verfahren zur Inline-Überwachung der Funktionsweise von mindestens einem Druckkopf anzugeben, mit dem die zuvor genannten Probleme zumindest teilweise behoben werden.

Das zuvor aufgeführte technische Problem wird erfindungsgemäß durch ein Verfahren zur Inline-Überwachung der Funktionsweise von mindestens einem Druckkopf mit den Merkmalen des Anspruchs 1 gelöst, eine Reihe von Verfahrensschritten aufweist, die nachfolgend einschließlich bevorzugter Ausgestaltungen beschrieben werden.

Zunächst wird ein zu druckendes Design als Ausgangsbilddatei in einem Ausgangsfarbraum bereitgestellt. Dazu wird aktuell die Ausgangsbilddatei selbst erzeugt oder eine bereits erzeugte Ausgangsbilddatei wird übertragen. Für die Darstellung der Ausgangsbilddatei wird in der Regel ein RGB-Farbraum (R - rot, G - grün, B - blau) verwendet, der in den meisten Bildverarbeitungsprogrammen eingesetzt wird. Für den RGB-Farbraum sind verschiedene Versionen als sRGB, AdobeRGB, Adobe Wide Gamut RGB etc. bekannt. Des Weiteren sind auch andere Farbraumdarstellung wie nach dem YUV-Farbmodell mit Angabe der Luminanz und der Chrominanz, CMYK (Cyan, Magenta, Yellow, Key (schwarz)) oder eine Farbseparation wie im Analogdruck möglich.

Die Ausgangsbilddatei wird dann von einem Farbmanagementsystem mit einem Eingabeprofil in einen L*a*b*-Farbraum transferiert und eine L*a*b*-Bilddatei wird erzeugt.

Das Farbmanagement, auch Color-Management genannt, stellt eine möglichst exakte Reproduzierbarkeit sicher, damit eine Druckvorlage mithilfe eines beliebigen Ausgabegeräts originalgetreu durch den Druckprozess reproduziert kann. Wichtig ist dabei die richtige Konvertierung der Daten bis hin zur Druckbilddatei.

Dazu wird ein Farbmanagementsystem generiert, innerhalb dessen Geräteprofile, also Tabellen mit den Farbcharakteristiken des Geräts, den jeweiligen geräteeigenen Farbraum in einen unabhängigen Austauschfarbraum, meist ein L*a*b*-Farbraum wie etwa CIELab, konvertiert werden kann. Mithilfe von sogenannten ICC-Profilen (ICC - International Color Consortium) können die Daten zwischen den verschiedenen Geräten so ausgetauscht werden, dass je nach physikalischer Grenze des Ein- und Ausgabegeräts zum Beispiel ein Ausdruck farblich möglichst identisch mit einer Monitordarstellung erstellt werden kann.

Insbesondere kann das Farbmanagement den Austauschfarbraum PCS-CIELab anwenden, eine spezielle Ausgestaltung des CIELab-Farbraums, der als Profil Connection Space (PCS) bezeichnet wird. Vorliegend wird daher bevorzugt ein ICC-Profil als Eingabeprofil verwendet, um die RGB-Bilddatei in den L*a*b*Farbraum zu transferieren.

Das Farbmanagementsystem (CMS - Colour Management System) gewährleistet also die Kommunikation der Elemente der grafischen Prozesskette untereinander, indem es eine allen gemeinsame Sprache verwendet, Standard ist dabei der erwähnte Farbraum L*a*b*, der in jedem ICC-Profil integriert ist. L*a*b* ist der Farbraum, der der menschlichen Sicht am nächsten kommt und der in absoluten Werten in einem Koordinatensystem die Farben definiert. Daher formt das Farbmanagement in jeder Bearbeitungsphase die im jeweiligen ICC-Profil integrierten L*a*b*-Werte aller Peripheriegeräte der Kette bis zum endgültigen Druck um. Der Farbmodus L*a*b* ist der Grundpfeiler der ICC-Architektur.

Der L*a*b*-Farbraum ist ein Farbraum, der den Bereich der wahrnehmbaren Farben abdeckt. Der L*a*b*-Farbraum wird durch ein dreidimensionales Koordinatensystem beschrieben. Die L*-Achse beschreibt die Helligkeit (Luminanz) der Farbe mit Werten von 0 (Schwarz) bis 100 (Weiß). Die a*-Achse beschreibt den Grün- oder Rotanteil einer Farbe, wobei negative Werte für Grün und positive Werte für Rot stehen. Die b*-Achse beschreibt den Blau- oder Gelbanteil einer Farbe, wobei negative Werte für Blau und positive Werte für Gelb stehen. Die Skalen der a*-Achse und der b*-Achse umfassen einen Zahlenbereich von -128 bis +127. Es sind aber auch andere Skalierungen bekannt.

Wird die Repräsentation der Farben im L*a*b*-Raum durchgeführt, so wird bei der Differenzanalyse der Abstand zweier Farben durch den Wert von ΔE00 (CIEDE2000) bestimmt. ΔE00 ist ein Maß für den Farbabstand, wobei der "Δ" hierbei als Zeichen der Differenz steht. Damit können farbige Druckergebnisse miteinander verglichen und die Abstände quantifiziert werden. Soll der Abstand zweier Farborte im L*a*b*-Farbraum bestimmt werden, so erfolgt die Berechnung des ΔE00 (CIEDE2000) der beiden Farborte gemäß der Formel in ISO13655:2008 Annex B.

Im nächsten Verfahrensschritt wird die L*a*b*-Bilddatei aus dem L*a*b*-Farbraum mit einem Ausgabeprofil in einen für den Drucker anwendbaren Druckfarbraum transferiert und eine Druckbilddatei wird erzeugt. Dabei wird bevorzugt wiederum ein ICC-Profil als ICC-Ausgabeprofil angewendet.

Der Druckfarbraum berücksichtigt die zum Drucken tatsächlich einzusetzenden Druckfarben, wobei die Anwendung des CMYK-Farbraums weit verbreitet ist (Cyan, Magenta, Yellow, Key bzw. Schwarz). Der Farbraum kann aber grundsätzlich auch andere Druckfarben oder auch mehr Druckfarben enthalten. Insoweit der Druckfarbraum beschränkt ist und nicht alle Farbschattierungen im Druckfarbraum enthalten sind, so wird durch das Farbmanagementsystem gewährleistet, dass innerhalb des zur Verfügung stehenden Druckfarbraums eine möglichst genaue Wiedergabe des Designs erfolgt.

Das Farbmanagementsystem wendet dann bevorzugt ein Rasterverfahren an, RIP - Raster Image Processing, bei dem eine Pixelfläche der Druckdatei durch eine Vielzahl von Tropfen der Druckfarben bzw. Tonerpunkten erzeugt wird, die gleichmäßig über die Fläche des Pixels verteilt angeordnet sind. Das RIP-Verfahren kann beispielsweise mit einer Software von Colorgate, Ergosoft oder Caldera durchgeführt werden.

Das Design wird dann von einem Drucker mit mindestens einem Druckkopf auf der Basis der Druckbilddatei auf einem Trägermaterial in einem Raster aus Pixeln aus mindestens einer Druckfarbe gedruckt. Das Raster besteht aus quer zur Druckrichtung verlaufenden Zeilen und aus in Druckrichtung verlaufenden Spalten. Als Drucktechnik kommt häufig Tintenstrahldruck zur Anwendung, aber andere Drucktechniken wie Laserdruck kann ebenfalls angewendet werden.

Somit kann beispielsweise die Zuordnung zwischen einer Spalte des Druckbildes und der Koordinate der Druckdüse innerhalb des entsprechenden Druckkopfes in der jeweiligen Reihe bekannt sein.

Als Trägermaterialien kommen Papier, Folie, Holz, Kunststoff, Keramik oder Mineralstoff in Betracht. Üblicher Weise werden als Druckfarben Tinten mit Pigmenten verwendet, dabei ist die Nutzung der Farben CMYK weit verbreitet.

Grundsätzlich kann das beschriebene Verfahren für Drucker auch mit nur einem Druckkopf mit einer Druckbreite von 3 cm angewendet werden.

Die bevorzugte Anwendung des beschriebenen Verfahrens liegt aber im industriellen Bereich, wobei relativ breite Trägermaterialien bedruckt werden. Beispielsweise wird das Verfahren für das Drucken von Dekorpapieren eingesetzt, die für eine Beschichtung von Holzwerkstoffplatten verwendet werden. Dabei treten Breiten von bis zu 1 oder 2,3 Meter auf. Für diese Breiten der zu bedruckenden Trägermaterialien weist der Drucker eine Mehrzahl von synchron, aber einzeln angesteuerten Druckköpfen auf. Zudem können die einzelnen Druckköpfe einzeln ansteuerbare Segmente aufweisen.

Bei einer häufigen Anwendung des Verfahrens ist der Drucker bzw. sind die Druckköpfe stationär angeordnet und das Trägermaterial wird unter den Druckköpfen hindurch transportiert, so dass die Druckrichtung der Transportrichtung entspricht. Dieses Druckverfahren wird als Single-Pass-Drucken bezeichnet. Somit wird das Druckbild bzw. das Dekor in Zeilen quer zur Druckrichtung und in Spalten parallel zur Druckrichtung gedruckt. Wenn also eine Fehlfunktion an einem der Druckköpfe oder einem der Segmente eines der Druckköpfe auftritt, so treten Abweichungen im Druckbild spaltenweise auf.

Bei einer Single-Pass-Druckmaschine wird das Dekor also in einem Durchgang über die komplette Druckbreite gedruckt. Beispielsweise kann ein Bild über 6 Druckköpfe in der Breite mit 4 Farben (CMYK) gedruckt werden, d.h. ein CMYK-Drucker besitzt 4 Reihen a 6 Druckköpfe.

Das Druckbild wird anschließend, zumindest abschnittsweise, bevorzugt aber auf der gesamten Breite des Druckbildes, mit einem optischen Messsystem mit einer räumlichen Auflösung (beispielsweise gemessen in dots per inch, dpi) im Bereich weniger Pixel des Druckbildes, insbesondere mit einer räumlichen Auflösung von einem Pixel des Druckbildes, in Druckrichtung zeilenweise vermessen und eine aus Zeilen und Spalten bestehende Messbilddatei wird erzeugt. Die Messbilddatei weist dann für jeden vermessenen Bildpunkt eine mehrkanalige Farbinformation auf.

Das optische System ist als spektrales Messsystem ausgebildet. Die räumliche Auflösung eines spektralen Messsystems liegt typischer Weise im Bereich von 90 bis 200 dpi, während Farbkameras eine höhere Auflösung haben.

Bevorzugt wird als spektrales Messsystem ein aus dem Stand der Technik bekanntes Inline Farbmesssystem (ICMS- Inline Colour Measurement System) der Firma ipac eingesetzt, das zur Farbbeurteilung mehrfärbiger Oberflächen eingesetzt wird. Das System weist einen spektralen inline angeordneten Scanner auf, der für verschiedene Trägermaterialien (Papier, Folie, Holz, Kunststoff, Keramik, Mineralstoff) und verschiedene Druckverfahren (Tiefdruck, Digitaldruck, Flexodruck, Offsetdruck, Siebdruck) eingesetzt werden kann. Das ICMS ist eine spektrale ortsaufgelöste Scantechnologie zur Messung eines Druckbildes und ist in der Lage, einen durch ein gut trainiertes und gesundes menschliches Auge wahrgenommenen optischen Farbeindruck maschinell nachzuempfinden und den Farbeindruck einer umfassenden objektiven Bewertung zu unterziehen.

Das spektrale Messsystem ist beispielsweise eine multispektrale Kamera mit 12 Bildkanälen pro aufgenommenem Bildpunkt, die pro Bildkanal eine Farbinformation erzeugt. Somit entsteht pro aufgenommenem Bildpunkt (Pixel) ein Farbspektrum aus ca. 10 bis 12 Bildkanälen. Eine übliche Sensortechnik besteht darin, auf einem CMOS Sensor einzelne Pixel mit unterschiedlichen Farbfiltern zu versehen, so dass mit einer Bildaufnahme eine Mehrzahl von spektralen Informationen aus einem aufgenommenen Bildbereich aufgezeichnet werden können.

Das spektrale Messsystem kann auch eine hyperspektrale Kamera sein, bei der pro Bildpunkt mittels einer optischen Einrichtung, beispielsweise mittels eines Prismas, das Licht spektral aufgespalten und mit einzelne spektrale Bereiche separat gemessen werden. Dadurch erhöht sich die spektrale Auflösung gegenüber einer multispektralen Kamera auf ca. 20 bis zu 250 oder mehr Bildkanälen.

Im Gegensatz zu einer RGB-Kamera wird somit pro Bildpunkt nicht nur eine Farbe, sondern eine spektrale Verteilung mit erheblich mehr Informationstiefe gewonnen. Während der Messung werden normierte Lichtbedingungen eingehalten, beispielsweise beträgt die Messgeometrie des Bildgebungssystems 45°:0° (Eintritt:Austritt).

Der nächste Verfahrensschritt beinhaltet, dass die Messbilddatei in eine L*a*b*-Messbilddatei transferiert wird. Die Berechnung der L*a*b*-Messbilddatei aus Bildinformationen einer spektralen Messbilddatei erfolgt beispielsweise gemäß der Norm CIE-15 bevorzugt in der CIE-Lichtart D50 und dem 2°-Normalbeobachter (CIE-15 ASTM 308E, ISO 13655 Annex I). Die Berechnung der L*a*b*-Messbilddatei aus Bildinformationen einer RGB-Messbilddatei erfolgt beispielsweise mit einer speziell für die jeweiligen Messbedingungen erstellten Transformation, die durch Kalibrierung mittels eines Spektrophotometer gewonnen wird.

Anschließend wird die L*a*b*-Messbilddatei mit dem Ausgabeprofil in den Druckfarbraum transferiert und eine Vergleichsbilddatei wird erzeugt. Dabei wird dasselbe Ausgabeprofil angewendet, das bereits als Ausgabeprofil vor dem Drucken des Designs bei der Umwandlung der L*a*b*-Bilddatei aus dem L*a*b*-Farbraum in den Druckfarbraum in Form der Druckbilddatei angewendet wurde. Dabei wird erneut bevorzugt der CMYK-Farbraum als Druckfarbraum verwendet.

Die Anwendung desselben ICC-Ausgabeprofils gewährleistet dabei eine optimale Vergleichbarkeit der im Anschluss zu vergleichen Daten.

Des Weiteren werden die Vergleichsbilddatei und eine vorgegebene Referenzbilddatei zueinander registriert, um einen Soll-Ist-Vergleich durchzuführen. Vor diesem Vergleich wird daher eine Referenzbilddatei erzeugt, die den Sollzustand des Druckes in zumindest einer Druckfarbe, bevorzugt aber in allen Druckfarben beinhaltet. Die Referenzdatei kann auf verschiedenen Wegen erzeugt werden.

Zum einen kann die Referenzbilddatei durch die Druckbilddatei, insbesondere für den CMYK-Farbraum, für mindestens eine Druckfarbe, bevorzugt für alle Druckfarben erzeugt werden. Denn die in der Druckbilddatei enthaltenen Intensitäten der einzelnen Druckfarben definieren das zu erzielende Druckergebnis in digitaler Form und die Druckfarb-Intensitäten können daher als Referenzbilddatei zur Sollwertbestimmung herangezogen werden.

Zum anderen kann die Referenzbilddatei durch eine aus einer vorigen Messung eines Druckbildes bzw. Dekors erzeugten und oben erläuterten Vergleichsbilddatei für mindestens eine Druckfarbe, bevorzugt für alle Druckfarben erzeugt werden. In diesem Fall werden die Daten der Referenzbilddatei nicht theoretisch aus der Ausgangsbilddatei erzeugt, sondern durch eine zuvor durchgeführte praktische optische Messung.

Bevor der Vergleich zwischen der Referenzbilddatei und der Vergleichsbilddatei durchgeführt werden kann, werden die beiden Bilddateien zueinander registriert, also durch Verschieben, Verdrehen oder Verzerren der Pixelmatrizen aufeinander ausgerichtet. Damit wird eine möglichst genaue Übereinstimmung der Pixel oder Pixelgruppen beider Bilddateien erreicht.

Durch den Vergleichsschritt wird eine Differenzbilddatei aus der Vergleichsbilddatei und der Referenzbilddatei erzeugt und die Differenzwerte der Differenzbilddatei werden zeilenweise ermittelt. Die Differenzwerte sind bei einer Übereinstimmung der Referenzbilddatei und der Vergleichsbilddatei in der Größenordnung einzelner Pixel bzw. Pixelgruppen theoretisch gleich Null, sind aber in der Praxis rauschbehaftet und schwanken um den Nullwert.

Die ermittelten Differenzwerte können über die Breite direkt den entsprechenden Druckkopfdüsen zugeordnet werden. Da in bevorzugter Weise sowohl die Druckbildausgabedatei als auch die Vergleichsbilddatei mit dem gleichen Ausgabeprofil (ICC-Profil) erzeugt werden, um CIELAB-Farbwerte in Farbkanäle (CMYK) des Druckers umzurechnen, kann die Ursache für eine Streifenbildung im Druckbild eindeutig einem physischen Druckkopf zugeordnet werden.

Der Vergleich kann prinzipiell zeilenweise erfolgen, jedoch ist es vorteilhaft, wenn die Differenzwerte spaltenweise über eine vorgegebene Anzahl von Zeilen gemittelt werden, vorzugsweise erfolgt diese Mittelung fortlaufend während des Druckvorgangs. Da die Druckgeschwindigkeit in der Regel relativ hoch ist und die zu erwartenden Schwankungen mit geringer Zeitkonstante auftreten, kann eine solche Mittelung zu besseren Ergebnissen führen.

Wenn die Werte in der Differenzbilddatei für jeweils eine der Druckfarben im Wesentlichen um den Nullwert schwanken, kann dies als Maß dafür dienen, dass das Druckergebnis keine oder nur eine verschwindend geringe Abweichung in dieser Druckfarbe aufweist.

Dann jedoch, wenn die Beträge der Differenzwerte einen vorgegebenen Schwellenwert nach unten oder nach oben überschreiten, kann eine Fehlfunktion des den abweichenden Pixeln zugeordneten Druckkopfes ermittelt werden. Der Schwellenwert kann dabei für jede der Druckfarben unterschiedlich oder gleich gewählt werden. Für jeden Abschnitt von Zeilen der Differenzbilddatei, in denen eine Überschreitung des Schwellenwertes festgestellt wird, kann dann eine Fehlfunktion des zugeordneten Druckkopfes oder eines zugeordneten Segmentes des Druckkopfes festgestellt werden. Da die Auflösung der optischen Messung sogar pixelgenau durchgeführt werden kann, kann sogar die Fehlfunktion einzelner Farbdüsen festgestellt werden.

Mit dem zuvor beschriebenen Verfahren können Farbabweichungen von weniger als ΔE00= 1 im L*a*b*-Farbraum gemessen werden.

Werden dekorierte Oberflächen im Digitaldruckverfahren erstellt, kann also die bildgebende optische Farbmesstechnik dazu genutzt werden, um die Farbtreue des Druckbildes zu prüfen. Treten bei einem Farbdruck zur Reproduktion eines Designs Farbabweichungen auf, können diese mit dem beschriebenen Verfahren gemessen werden. Daher kann der mindestens eine Druckkopf des Druckers durch Veränderung der Steuerparameter innerhalb der Druckersteuerung so angepasst werden, dass die Differenzwerte in der Differenzbilddatei minimiert werden.

Das Korrigieren des Druckers kann dabei im fortlaufenden Druckbetrieb ohne Unterbrechung des Druckens erfolgen, da die auftretenden und durch das beschriebene Verfahren erkennbaren Änderungen so gering sind, dass diese im Druckbild für das menschliche Auge fast nicht wahrnehmbar sind.

In bevorzugter Weise kann der mindestens eine Druckkopf des Druckers durch Veränderung der Steuerparameter innerhalb der Druckersteuerung so angepasst werden, dass die Differenzwerte in der Differenzbilddatei minimiert werden. Somit kann durch die Steuerung eine Korrektur von durch den mindestens einen Druckkopf erzeugten Fehlern erfolgen, ohne dass der Druckprozess unterbrochen werden muss.

Somit kann in Kombination des Farbmanagementsystems mit der Druckersteuerung eine automatische Korrektur erreicht werden.

Eine weiter verbesserte Farbkorrektur kann nach der zuvor beschriebenen Verfahren dann erreicht werden, wenn das gesamte Drucksystem mit dem gleichen optischen Farbmesssystem charakterisiert, also kalibriert, insbesondere linearisiert und profiliert wird.

Im Folgenden wird die Erfindung anhand von Ausführungsbeispielen mit Bezug auf die Zeichnung erläutert. In der Zeichnung zeigen
- Fig. 1: eine erste Anlage zur Durchführung eines erfindungsgemäßen Verfahrens,
- Fig. 2: eine zweite Anlage zur Durchführung eines erfindungsgemäßen Verfahrens,
- Fig. 3: eine dritte Anlage zur Durchführung eines erfindungsgemäßen Verfahrens,
- Fig. 4: ein Flussdiagramm, das ein erfindungsgemäßes Verfahren beschreibt und
- Fig. 5: ein gedrucktes Design, dessen Farbkomponenten analysiert werden,
- Fig. 6a und b: zwei kombinierte Darstellungen für eine Druckfarbe zur Erläuterung des erfindungsgemäßen Verfahrens,
- Fig. 7a-d: Darstellung der Differenzbilddatei für vier Druckfarben für ein korrekt gedrucktes Design und
- Fig. 8a-d: Darstellungen der Differenzbilddatei für vier Druckfarben für ein im Farbkanal Magenta M fehlerhaft gedrucktes Design.

In der nachfolgenden Beschreibung der verschiedenen erfindungsgemäßen Ausführungsbeispiele werden Bauteile und Elemente mit gleicher Funktion und gleicher Wirkungsweise mit denselben Bezugszeichen versehen, auch wenn die Bauteile und Elemente bei den verschiedenen Ausführungsbeispielen in ihrer Dimension oder Form Unterschiede aufweisen können.

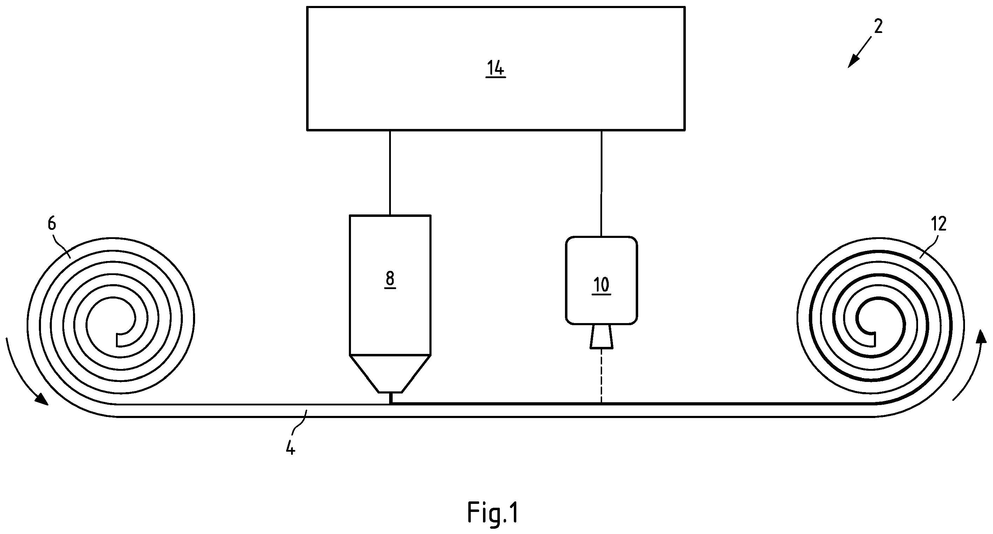

Fig. 1 zeigt eine erste Anlage 2 zur Durchführung des Verfahrens zur automatisierten Charakterisierung eines kontinuierlichen Digitaldrucksystems. Zunächst wird das Trägermaterial 4 von einer ersten Rolle 6 abgerollt, unterhalb des Digitaldruckers 8 und des optischen Messsystems 10 geführt und dann wieder auf einer Rolle 12 aufgerollt. Insoweit kann man von einem endlosen Trägermaterial 4 sprechen, mit dem das kontinuierliche Drucken und Charakterisieren durchgeführt wird. Dabei ist selbstverständlich, dass das endlose Band eine endliche, aber große Länge aufweist.

Die Ergebnisse der optischen Messungen durch das optische Messsystem werden einer Steuer- und Charakterisierungseinrichtung 14 übertragen, die wiederum nicht nur die Druckdateien oder andere Steuerungsdateien, sondern auch die Charakterisierungsdateien auf den Digitaldrucker 8 überträgt.

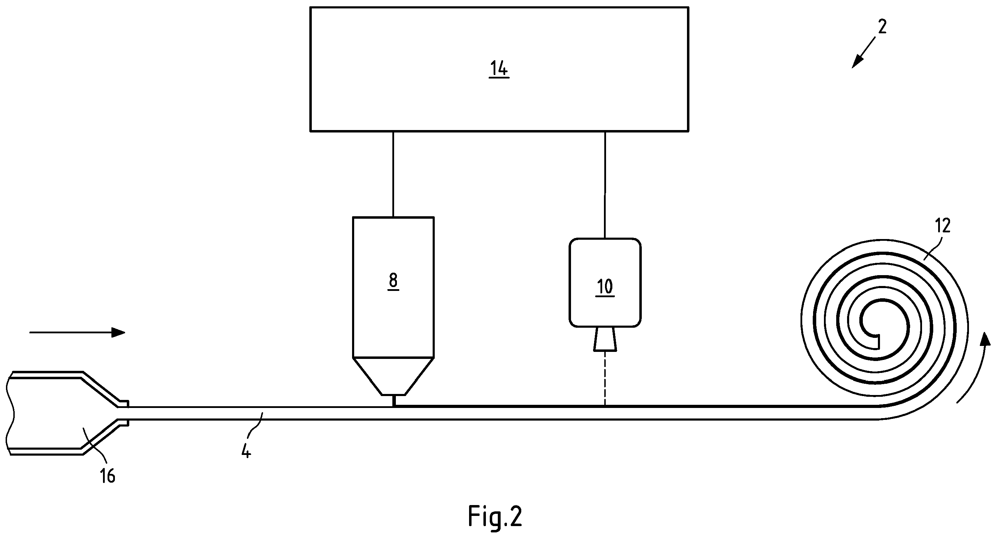

Fig. 2 zeigt eine zweite Anlage 2 zur Durchführung des Verfahrens zur automatisierten Charakterisierung eines kontinuierlichen Digitaldrucksystems. Im Vergleich zur Anlage nach Fig. 2 wird das Trägermaterial 4 nicht von einer Rolle abgewickelt, sondern durch eine Extrusionsprozess hergestellt. Dazu ist schematisch ein Extrusionswerkzeug 16 dargestellt, aus dem ein Strang zur Herstellung beispielsweise eines Kantenmaterials für die Anwendung bei Möbelplatten extrudiert wird. Grundsätzlich notwendige Kalander und Abkühlstationen sind hier der Einfachheit wegen nicht dargestellt. Anstelle des Extrusionswerkzeugs 16 kann auch eine Stranggussvorrichtung eingesetzt werden, um einen kontinuierlichen Strang an Trägermaterial zu erzeugen.

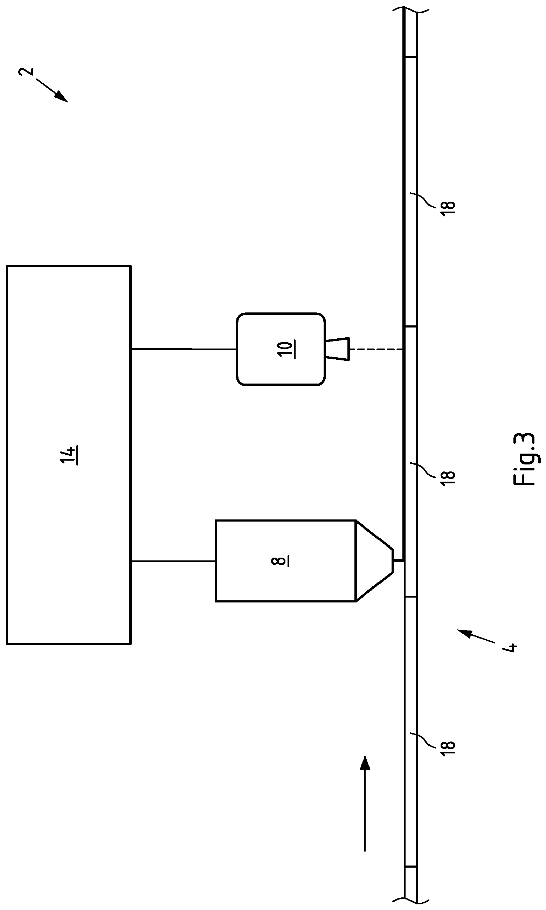

Fig. 3 zeigt eine dritte Anlage 2 zur Durchführung des Verfahrens zur automatisierten Charakterisierung eines kontinuierlichen Digitaldrucksystems. Im Vergleich zu den Anlagen nach den Fig. 2 und 3 ist das Trägermaterial 4 nicht als endloses Material ausgebildet, sondern besteht aus einer Vielzahl von aneinander anstoßenden Elementen 18, beispielsweise Platten oder Blättern. Das Trägermaterial 4 besteht also aus einzelnen Elementen 18, die vor und nach dem Bedrucken separat vorliegen. Das kontinuierliche Drucken und Messen von Farbcharts erfolgt dann auf dem aus einzelnen Elementen 18 zusammengesetzten Trägermaterial 4.

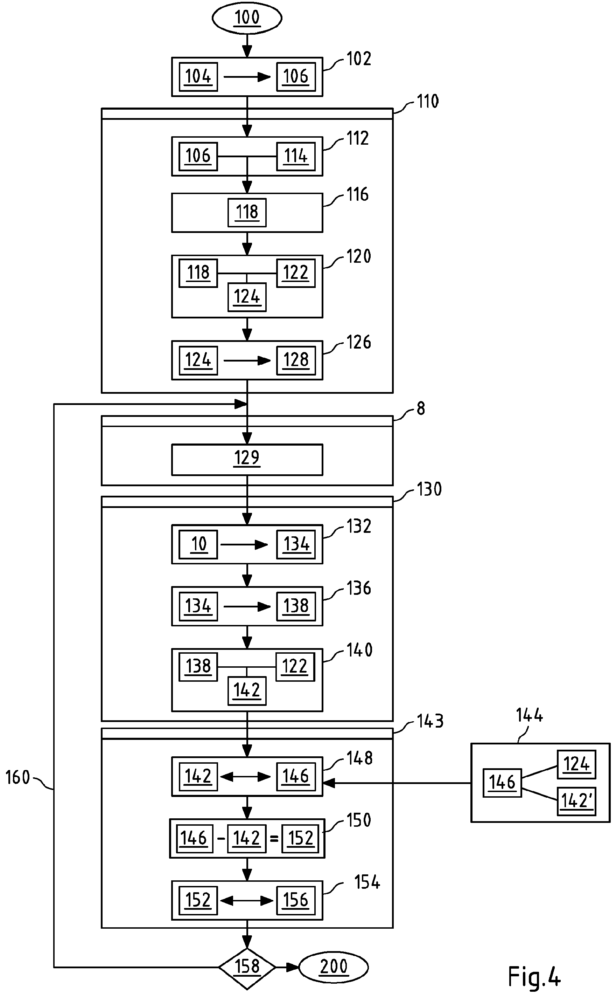

Fig. 4 zeigt ein Ausführungsbeispiel eines erfindungsgemäßen Verfahrens zur Inline-Überwachung der Funktionsweise von mindestens einem Druckkopf.

Nach dem Start in Symbol 100 wird in Schritt 102 ein zu druckendes Design 104 als Ausgangsbilddatei 106 in einem RGB-Ausgangsfarbraum bereitgestellt. Dazu kann die Datei selbst erzeugt oder eine bereits erzeugte und gespeicherte Ausgangsbilddatei verwendet werden.

Die Ausgangsdatei 106 wird danach mit einem Farbmanagementsystem 110 weiter verarbeitet. Im Schritt 112 wird die Ausgangsbilddatei 106 mit einem ICC-Eingabeprofil 114 verknüpft und im Schritt 116 in einen L*a*b*-Farbraum in Form eines PCS-CIELAB Farbraums transferiert. Daraus entsteht eine L*a*b*-Bilddatei 118, die das zu druckende Design in einem unabhängigen Farbraum darstellt.

In Schritt 120 werden die L*a*b*-Bilddatei aus dem PCS-CIELAB Farbraum mit einem ICC- Ausgabeprofil 122 verknüpft, in einen für den Drucker anwendbaren CMYK-Druckfarbraum transferiert und daraus eine Druckbilddatei 124 erzeugt.

In Schritt 126 wird dann mittels eines Raster Image Processors (RIP) die Druckbilddatei 124 für den Tintenstrahldrucker 8 (siehe Fig. 1 bis 3) als Steuerdatei 128 umgerechnet. Durch den RIP 128 wird für jeden zu druckende Pixel und für jede Druckfarbe eine Verteilung einer Vielzahl von Tropfen der jeweiligen Druckfarbe errechnet.

In Schritt 129 wird das Design von dem Tintenstrahldrucker 8 mit mindestens einem Druckkopf auf der Basis der Druckbilddatei 124 bzw. der Steuerdatei 128 auf einer Papierbahn als Trägermaterial 4 (siehe Fig. 1 bis 3) in einem aus quer zur Druckrichtung verlaufenden Zeilen und aus in Druckrichtung verlaufenden Spalten bestehenden Raster aus Pixeln aus mindestens einer Druckfarbe CMYK gedruckt. Wegen der Breite der Papierbahn 4 weist der Drucker 8 für jede Druckfarbe separat mehrere Druckköpfe mit einzelnen Segmenten aus Düsen.

Das Vermessen und Auswerten des gedruckten Designs wird anschließend mit einem Messsystem 130 und Auswertesystem 143 erfasst und bewertet.

Zunächst wird mit einem spektralen Messsystem, das in den Fig. 1 bis 3 mit dem Bezugszeichen 10 gekennzeichnet ist, im Schritt 132 das Druckbild mit einer räumlichen Auflösung von einem Pixel des Druckbildes in Druckrichtung zeilenweise vermessen und eine aus Zeilen und Spalten bestehende spektrale Messbilddatei 134 wird erzeugt. Dabei kommt das Messsystem ICMS der Firma ipac zum Einsatz. Die Lichtbedingungen sind beim Messvorgang normiert, die Messgeometrie des Bildgebungssystems beträgt 45°:0° (Eintritt:Austritt).

Im Schritt 136 wird dann die spektrale Messbilddatei 134 in eine L*a*b*-Messbilddatei 138 transferiert. Die Umrechnung erfolgt dabei bevorzugt gemäß der Norm CIE-15 bevorzugt in der CIE-Lichtart D50 und dem 2°-Normalbeobachter (CIE-15 ASTM 308E, ISO 13655 Annex I).

Im weiteren Schritt 140 wird die L*a*b*-Messbilddatei 138 mit dem Ausgabeprofil 122, das im Schritt 120 bereits angewendet worden ist, in den CMYK-Druckfarbraum transferiert und eine Vergleichsbilddatei 142 erzeugt. Somit wird dasselbe ICC-Ausgabeprofil 122 angewendet, das auch für das Erstellen der CMYK-Druckbilddatei 124 verwendet worden ist.

In dem Auswertesystem 143 wird zunächst in einem separaten Schritt 144 eine Referenzbilddatei 146 für die Verwendung im weiteren Verfahren einmalig oder in vorgegebenen Zeitabständen wiederholend erzeugt. Die Referenzbilddatei 146 kann dabei zum einen direkt aus der Druckbilddatei 124 aus Schritt 120 für die Druckfarben CMYK erzeugt werden. Zum anderen kann die Referenzbilddatei 146 aus einer vorigen Vergleichsbilddatei 142' für die Druckfarben CMYK erzeugt werden. Eine vorige Vergleichsbilddatei 142' ist dabei eine Vergleichsbilddatei 142 eines vorangegangenen Messzyklus, der vor dem aktuellen Messvorgang stattgefunden hat. Dabei kann ein initialer erster Messvorgang oder ein gegebenenfalls wiederholter Messvorgang herangezogen werden.

Die Referenzbilddatei 146 wird dann dem Auswertesystem 143 zugeführt, wobei im folgenden Verfahrensschritt 148 die Vergleichsbilddatei 142 und die zuvor festgelegte Referenzbilddatei 146 zueinander registriert werden, also durch Verschieben, Verdrehen oder Verzerren der Pixelmatrizen aufeinander ausgerichtet.

Das Verfahren wird dann im Schritt 150 fortgesetzt und es wird eine Differenzbilddatei 152 aus der Vergleichsbilddatei 142 und der Referenzbilddatei 146 erzeugt, so dass eine pixelgenaue Differenzwertematrix erzeugt wird. Die Differenzwerte der Differenzbilddatei 152 können dabei durch Mitteln der Zeilenwerte einer Spalte über eine vorgegebene Anzahl von Zeilen ermittelt werden.

Im Schritt 154 wird dann eine Auswertung der Differenzbilddatei 152 durchgeführt. Dann, wenn die Beträge der Differenzwerte einen vorgegebenen Schwellenwert 156 überschreiten, wird eine Fehlfunktion des den abweichenden Pixeln zugeordneten Druckkopfes des Tintenstrahldruckers 8 ermittelt. Dabei kann es zu einer Veränderung eines Abschnittes von Pixeln einer Zeile bzw. einer gemittelten Zeile der Differenzbilddatei 152 kommen, so dass eine Fehlfunktion eines Druckkopfes oder eines Segments des Druckkopfes, also nur einem Teil des Druckkopfes identifiziert werden kann. Diese kann dann nachfolgend berücksichtigt und korrigiert werden. Eine große Differenz nur in wenigen Pixeln oder nur einem Pixel deutet eher auf eine Verschmutzung oder Beschädigung einer Düse oder nur weniger Düsen des Druckkopfes hin. Eine solche Beeinträchtigung kann durch eine gezielte Ansteuerung des Druckkopfes nicht behoben werden, kann aber als Fehlermeldung mit Identifikation des Druckkopfes ausgegeben werden.

Im Entscheidungsschritt 158 wird festgestellt, ob das Verfahren mit Schritt 200 beendet wird oder ob das Verfahren fortgesetzt werden soll. Dann erfolgt ein Rücksprung (dargestellt durch den Pfeil 160) zum Druckersystem zum fortwährenden Drucken des Designs. Wenn der Schwellenwert in allen Differenzwerten nicht überschritten worden ist oder kein durch den Eingriff des Farbmanagementsystems behebbarer Fehler ermittelt worden ist, so wird das Verfahren ohne Änderung des Drucksystems fortgesetzt.

Wenn jedoch bei der Differenzmessung festgestellt wurde, dass ein Fehler eines gesamten Druckkopfes oder eines Segments eines der Druckköpfe aufgetreten ist, der durch das Farbmanagementsystem, beispielsweise durch Änderung einer spezifischen Steuerspannung, gemindert oder behoben werden kann, dann wird mit dem Rücksprung (Pfeil 160) eine entsprechende Information an das Drucksystem übertragen. Diese Informationen werden im Drucksystem verwendet, um beispielsweise die Steuerspannung für einen der verwendeten Druckköpfe, einzelne Segmente eines der verwendeten Druckköpfe so zu verändern, dass der Abstand zwischen Sollwert und Istwert minimiert wird. Nach einer Änderung des Drucksystems wird dann nachfolgend weiter das beschriebene Verfahren der Schritte 129, 132, 140, 148, 150 und 154 fortgesetzt.

Somit kann in fortlaufender Weise ohne Unterbrechung des Druckvorgangs ein durch das Farbmanagementsystem behebbarer Fehler behoben und somit die Druckqualität verbessert werden. Diese Fehlerbehebung kann auch bei für ein menschliches Auge nicht sichtbaren Farbabweichungen im L*a*b*-Farbraum von weniger als ΔE00 = 1 durchgeführt werden. Das bedeutet, dass Fehler nur im für das menschliche Auge nicht wahrnehmbaren Bereich entstehen und wieder behoben werden können.

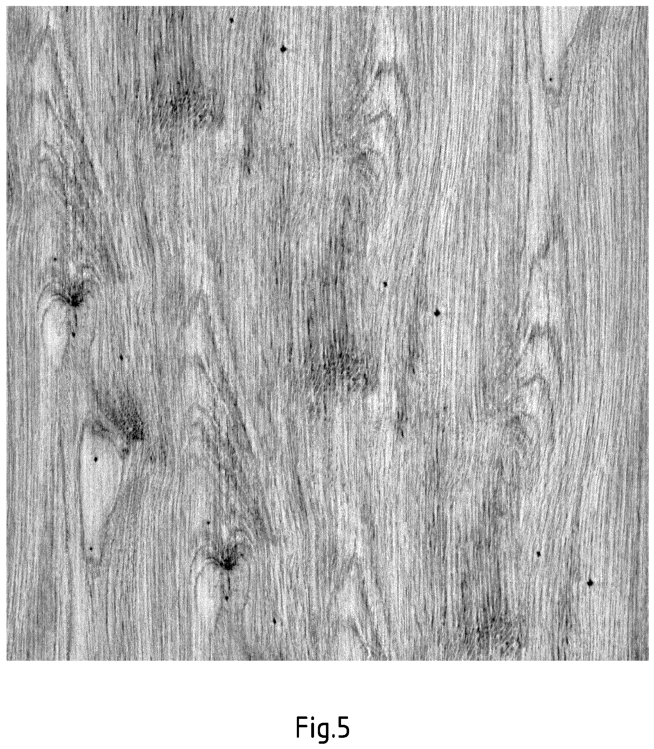

In den Fig. 5 bis 7 sind Beispielbilder aus einem Test gezeigt, der mit Hilfe des in Fig. 4 gezeigten Ablaufdiagramms mit einem spektralen Messsystem durchgeführt wurde. Fig. 5 zeigt in einem Graustufenbild das Design einer Reproduktion einer Holzdekoroberfläche mit einer Maserung. Der überwiegende Farbton des Designs ist ein helles Braun mit einer Maserung in dunkleren Brauntönen.

Bei dem Test wurde ausgehend von einem gut eingestellten Drucksystem eine Fehlerentstehung im Farbkanal Magenta (M) absichtlich hervorgerufen. Dazu wurde zunächst mit einer gut eingestellten Druckmaschine gedruckt (Probe 1 M) und im weiteren Verlauf die Spannung an einem Druckkopf der Farbe Magenta geringfügig verändert (Probe 2 M). Die Spannungsänderung führte über die Breite dieses Druckkopfes zu einer Veränderung im Farbbild, die messtechnisch einen Farbabstand von ΔE00 = 1 hervorgerufen hat.

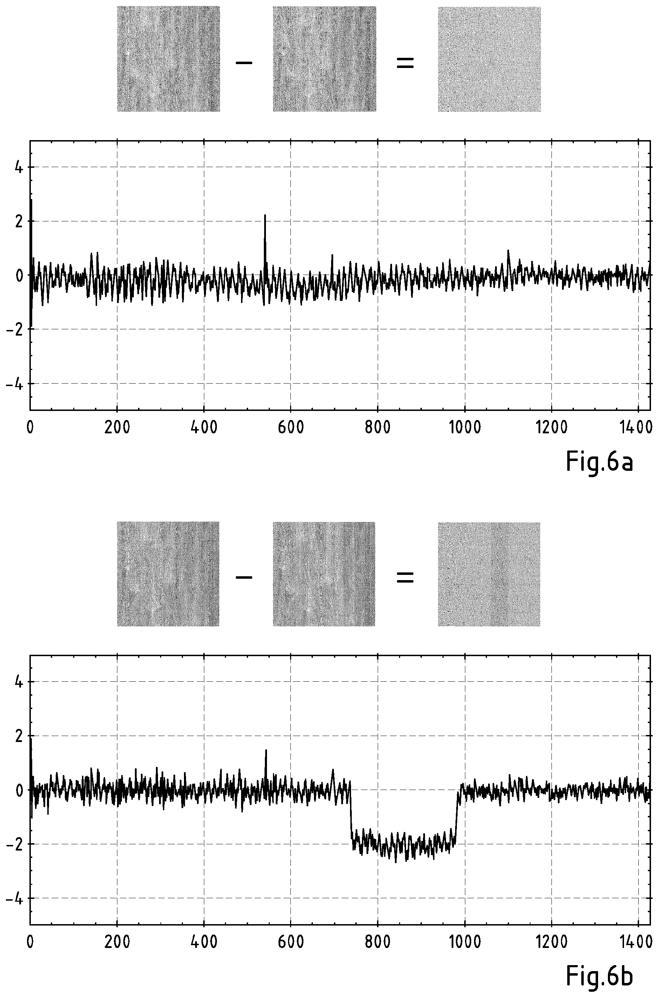

Die Fig. 6a und 6b zeigen in quadratischen Ausschnitten der Druckbilder der Proben 1 M und 2 M sowie die entsprechenden Referenzbilder ebenfalls für Magenta (M). Die Druckbilder 1 M und 2 M sind jeweils mit dem Referenzbild M pixelweise registriert. Dargestellt sind die jeweiligen Grauwertbilder für die Druckfarbe. Mit den mathematischen Symbolen für minus und gleich ist die Gleichung dargestellt, mit der pixelgenau die Bilder voneinander abgezogen wurden.

Die errechneten Differenzen können positive und negative Zahlenwerte annehmen. Daher werden die Differenzen jeweils zu einem vorgegebenen Standard-Pixelwert addiert, beispielsweise zu einem mittleren Wert von 50% innerhalb der darstellbaren Intensitäten der Druckfarbe zwischen 0% und 100%. Daher sind die Grauwerte des Differenzbildes in ungefähr gleicher Tönung wie die Ausgangsbilder, obwohl die Differenzwerte kleiner als die absoluten Pixelwerte der Ausgangsbilder sind.

Die Fig. 6a und 6b zeigen auch jeweils einen Graphen, der die Differenzwerte pixelweise entlang der Zeilen darstellt. Die Differenzwerte sind dabei zu jeweils einem Pixel der Zeile über die gesamte Höhe der Spalten in den dargestellten Bildern gemittelt. Dabei zeigen die x-Achse in Einheiten Anzahl der Pixel einer Zeile und die y-Achse die Graustufen der gemittelten Differenzwerte. Man erkennt grundsätzlich eine um die Nulllinie schwankende Linie (Rauschen). Lediglich bei Pixelwert ca. 550 ist in beiden Graphen eine Spitze in den Differenzwerten zu erkennen, die von einem Fehler einer einzelnen Düse verursacht wird. Ein solcher Fehler ist mit dem beschriebenen Verfahren jedoch nicht behebbar. Dieser Fehler kann aber von dem Mess- und Auswertesystem 130 in Form einer Fehlermeldung angezeigt werden.

Der Graph in Fig. 6a zeigt darüber hinaus keine auffälligen Schwankungen, der zugrunde liegende Druckprozess scheint somit in Ordnung zu sein und eine Korrektur des Drucksystems ist nicht erforderlich.

Der Graph in Fig. 6b zeigt dagegen im Bereich der Pixelnummern zwischen ca. 710 und 980 einen Abschnitt mit rauschbehafteten, aber ansonsten konstant niedrigerem Verlauf als die Nulllinie. Dieser Verlauf wird durch die im vorliegenden Test bewusst herbeigeführte Fehlfunktion des Druckkopfes hervorgerufen. Dieser Abschnitt korrespondiert also mit dem fehlerhaft angesteuerten Druckkopf, so dass die Ursache des Fehlers durch eine geänderte Ansteuerung des Druckkopfes behoben werden kann.

Wie oben erwähnt, bewirkt die bewusste Veränderung der Ansteuerung des Druckkopfes einen Farbabstand von ungefähr ΔE00 = 1, der im dargestellten Druckbild der Probe 2 M in den Grauwerten optisch nicht erkennbar ist. Somit kann das Verfahren auch unterhalb der Sichtbarkeitsgrenze auftretende Fehler identifizieren. Im Gegensatz dazu ist in dem Differenzbild zu Probe 2 ein dunkler senkrechter Streifen erkennbar, der sich auch optisch von den angrenzenden Bereichen des Graphen abhebt. Das liegt im Wesentlichen daran, dass das Differenzbild gemittelte Werte über eine Vielzahl von Spalten beinhaltet und somit kleinere Schwankungen in dem gleichmäßigeren Bild sichtbarer sind.

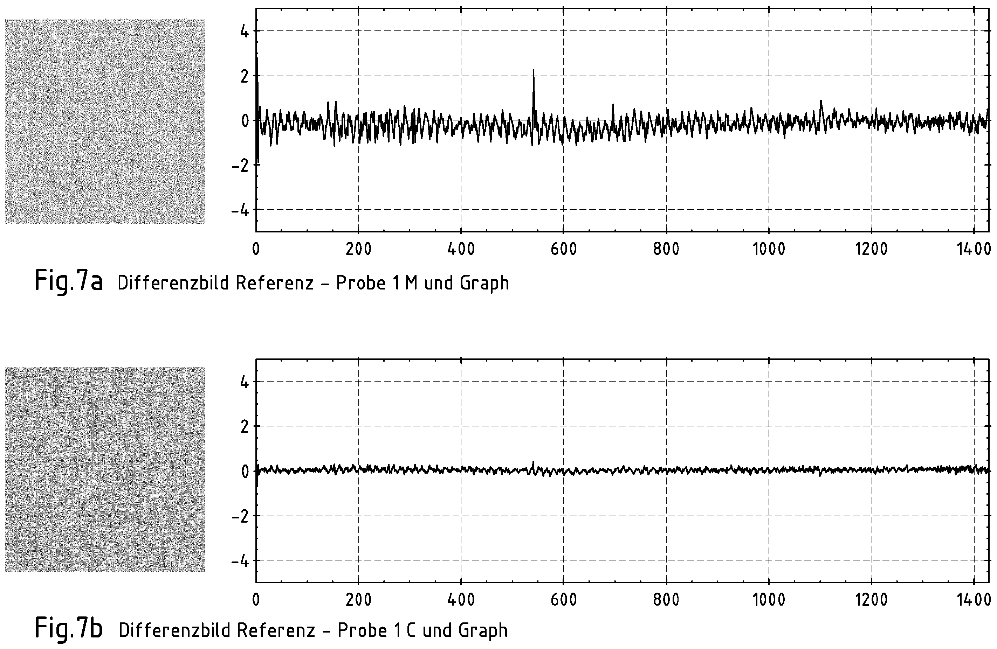

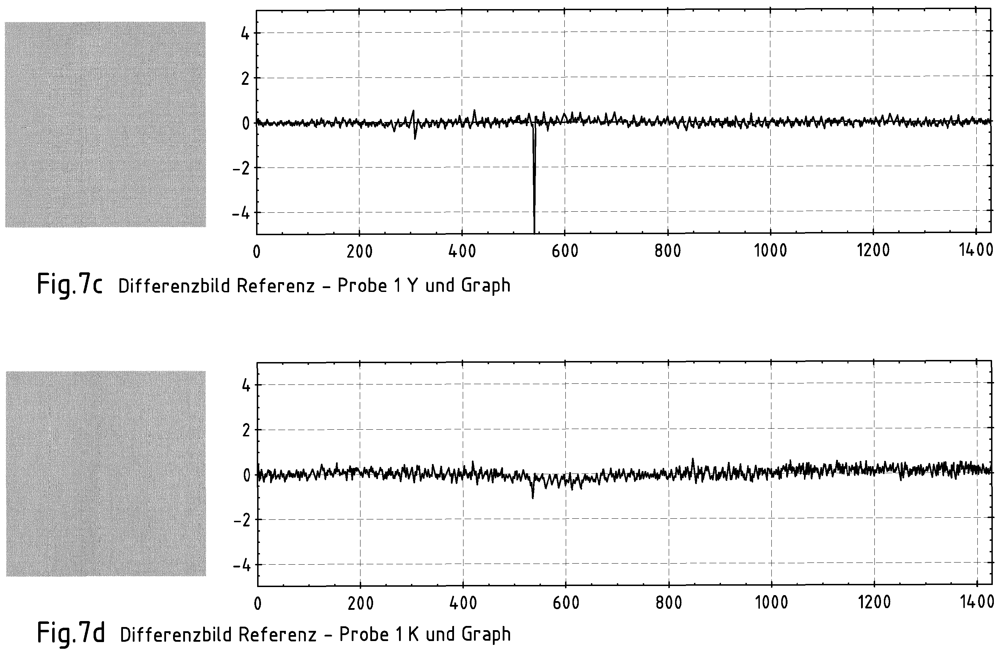

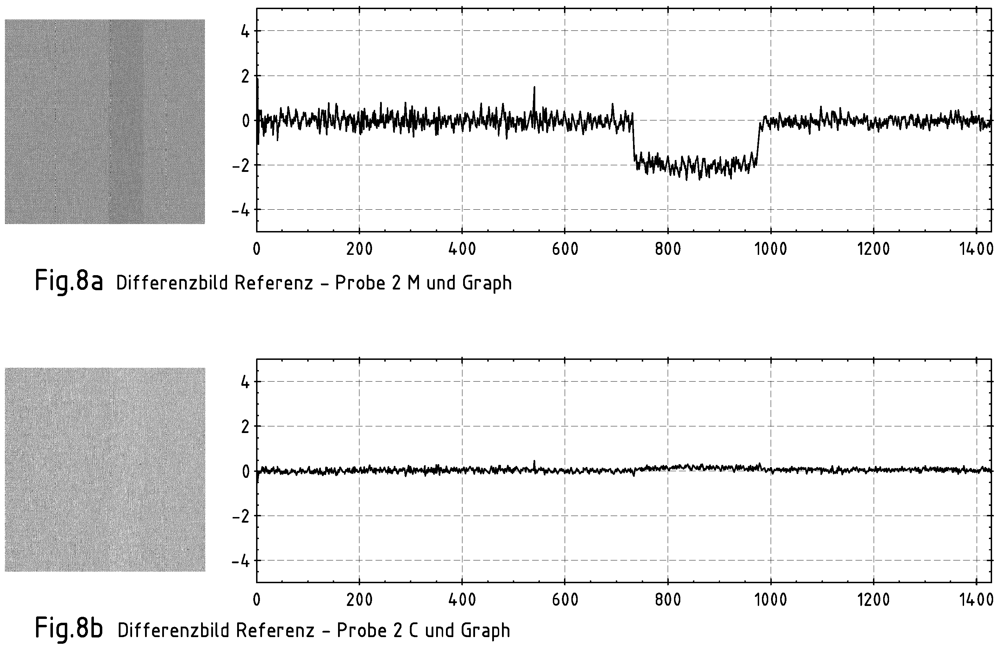

Fig. 7a bis 7d sowie 8a bis 8d zeigen für die vier Farbkanäle M (Magenta), C (Cyan, blau), Y (Yellow) und K (Key, schwarz) quadratische Ausschnitte der Differenzbilder für die Proben 1 und 2 sowie die zugehörigen Graphen.

Für die Probe 1 ergibt sich, bis auf einen Fehler an einzelnen Pixeln für die Proben 1 M und 1 Y, ein Verlauf, der um die Nulllinie schwankt, wie oben bereits beschrieben worden ist.

Für die Probe 2 ergibt sich zunächst gemäß Fig. 8a das Verhalten entsprechend Fig. 6b. Der Abfall in der Differenzkurve entspricht dem im Test erzwungenen Fehler am Druckkopf.

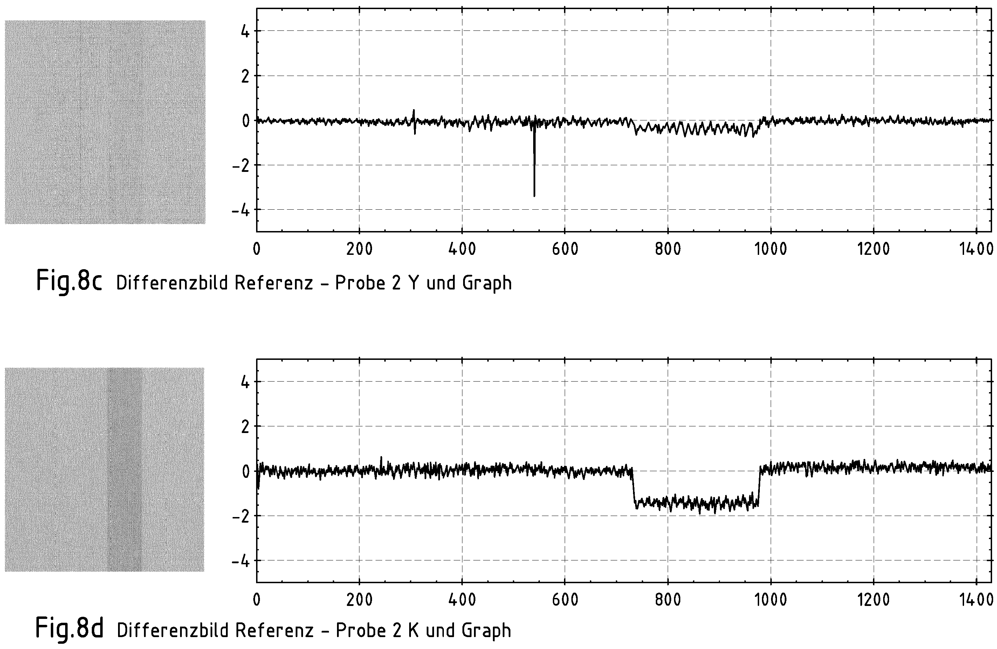

Die Verläufe der Differenzwerte in den Fig. 8b bis 8d der anderen Druckfarben zeigen, obwohl deren zugeordnete Druckköpfe keine veränderte Einstellung hatten, ebenfalls eine Änderung in dem Zeilenabschnitt, der in Fig. 8a deutlich zu erkennen ist. Während in Fig. 8b nur eine leichte Erhöhung der Differenzwerte und in Fig. 8c eine leichte Absenkung der Differenzwerte zu erkennen ist, zeigt Fig. 8d für den K-Kanal einen deutlichen, wenngleich nicht so starken Abfall wie im M-Kanal.

Diese Änderungen der Differenzwerte entstehen dadurch, dass bei der spektralen Messung der Probe 2 aufgrund des veränderten Anteils an Magenta M eine andere Farbwirkung als bei Probe 1 entsteht. Die spektralen Messwerte werden - wie oben beschrieben - über den CIELab-Farbraum und dann mit dem ICC-Ausgabeprofil in den CMYK-Farbraum umgewandelt. Diese rechnerische Abbildung ist nicht in jedem Fall eindeutig und kann zu den beschriebenen Änderungen der Differenzwerte in an sich nicht veränderten Farbkanälen führen.

Da jedoch in dem Farbkanal, hier der Farbkanal Magenta M, in dem der Fehler auftritt, die Schwankung in den Differenzwerten am größten ist, kann der aufgetretene Fehler dem entsprechenden Kanal zugeordnet werden. Die Korrekturmaßnahme an diesem Farbkanal wird dann eine Verringerung aller Differenzwerte führen. Eine weitere Regel besteht darin, sofern Schwankungen in allen Farbkanälen auftreten, zunächst nicht den Farbkanal Key K (Schwarz) zu korrigieren.

## Patentansprüche

1. Verfahren zur Inline-Überwachung der Funktionsweise von mindestens einem Druckkopf,
- bei dem ein zu druckendes Design als Ausgangsbilddatei in einem Ausgangsfarbraum bereitgestellt wird,
- bei dem die Ausgangsbilddatei von einem Farbmanagementsystem mit einem Eingabeprofil in einen L*a*b*-Farbraum transferiert und eine L*a*b*-Bilddatei erzeugt wird,
- bei dem die L*a*b*-Bilddatei aus dem L*a*b*-Farbraum mit einem Ausgabeprofil in einen für den Drucker anwendbaren Druckfarbraum transferiert und eine Druckbilddatei erzeugt wird,
- bei dem das Design von einem Drucker mit mindestens einem Druckkopf auf der Basis der Druckbilddatei auf einem Trägermaterial in einem aus quer zur Druckrichtung verlaufenden Zeilen und aus in Druckrichtung verlaufenden Spalten bestehenden Raster aus Pixeln aus mindestens einer Druckfarbe gedruckt wird,
- bei dem das Druckbild, zumindest abschnittsweise, mit einem optischen spektralen Messsystem mit einer räumlichen Auflösung im Bereich weniger Pixel, insbesondere mit einer räumlichen Auflösung von einem Pixel, in Druckrichtung zeilenweise vermessen und eine aus Zeilen und Spalten bestehende Messbilddatei erzeugt wird,
- bei dem die Messbilddatei in eine L*a*b*-Messbilddatei transferiert wird,
- bei dem die L*a*b*-Messbilddatei mit dem Ausgabeprofil in den Druckfarbraum transferiert und eine Vergleichsbilddatei erzeugt wird,
- bei dem die Vergleichsbilddatei und eine vorgegebene Referenzbilddatei zueinander registriert werden,
- bei dem eine Differenzbilddatei aus der Vergleichsbilddatei und der Referenzbilddatei erzeugt wird,
- bei dem die Differenzwerte der Differenzbilddatei zeilenweise ermittelt werden und
- bei dem dann, wenn die Beträge der Differenzwerte einen vorgegebenen Schwellenwert überschreiten, eine Fehlfunktion des den abweichenden Pixeln zugeordneten Druckkopfes ermittelt wird und
- bei dem die Verfahrensschritte im Inline-Betrieb im fortlaufenden Druckbetrieb ohne Unterbrechung des Druckens durchgeführt werden.

2. Verfahren nach Anspruch 1,
- bei dem eine Referenzbilddatei aus der Druckbilddatei für mindestens eine Druckfarbe erzeugt wird.

3. Verfahren nach Anspruch 1,
- bei dem eine Referenzbilddatei aus einer vorigen Vergleichsbilddatei für mindestens eine Druckfarbe erzeugt wird.

4. Verfahren nach einem der Ansprüche 1 bis 3,
- bei dem die Differenzwerte spaltenweise über eine vorgegebene Anzahl von Zeilen gemittelt werden, vorzugsweise fortlaufend während des Druckvorgangs.

5. Verfahren nach einem der Ansprüche 1 bis 4,
- bei dem Farbabweichungen im L*a*b*-Farbraum von weniger als ΔE00 = 1 feststellbar sind.

6. Verfahren nach einem der Ansprüche 1 bis 5,
- bei dem der mindestens eine Druckkopf des Druckers durch das Farbmanagementsystem so angesteuert wird, dass die Differenzwerte in der Differenzbilddatei minimiert werden.

## Claims

1. Method for inline monitoring of the functionality of at least one printhead,
- in which a design to be printed is provided as an original image file in an original color space,
- in which the original image file is transferred by a color management system with an input profile into an L*a*b* color space and an L*a*b* image file is generated,
- in which the L*a*b* image file, from the L*a*b* color space, is transferred with an output profile into a print color space applicable for the printer and a print image file is generated,
- in which the design is printed by a printer with at least one printhead on a substrate based on the print image file in a raster of pixels of at least one printing color, the raster consisting of rows extending transversely to the printing direction and columns extending in the printing direction,
- in which the printed image, at least in sections, is measured row by row in the printing direction by an optical spectral measurement system with a spatial resolution in the range of a few pixels, in particular with a spatial resolution of one pixel, and a measurement image file consisting of rows and columns is generated,
- in which the measurement image file is transferred into an L*a*b* measurement image file,
- in which the L*a*b* measurement image file is transferred with the output profile into the print color space and a comparison image file is generated,
- in which the comparison image file and a predetermined reference image file are registered with each other,
- in which a difference image file is generated from the comparison image file and the reference image file,
- in which the difference values of the difference image file are determined row by row, and
- in which, if the absolute values of the difference values exceed a predetermined threshold value, a malfunction of the printhead assigned to the deviating pixels is determined, and
- in which the method steps are carried out in inline operation during continuous printing operation without interruption of printing.

2. Method according to claim 1,
- in which a reference image file is generated from the print image file for at least one printing color.

3. Method according to claim 1,
- in which a reference image file is generated from a previous comparison image file for at least one printing color.

4. Method according to any one of claims 1 to 3,
- in which the difference values are averaged column by column over a predetermined number of rows, preferably continuously during the printing process.

5. Method according to any one of claims 1 to 4,
- in which color deviations in the L*a*b* color space of less than ΔE00 = 1 are detectable.

6. Method according to any one of claims 1 to 5,
- in which the at least one printhead of the printer is controlled by the color management system such that the difference values in the difference image file are minimized.

## Revendications

1. Procédé pour la surveillance en ligne du fonctionnement d'au moins une tête d'impression,
- dans lequel un motif destiné à être imprimé est fourni sous forme de fichier image source dans un espace colorimétrique source,
- dans lequel le fichier image source est transféré par un système de gestion des couleurs avec un profil d'entrée dans un espace colorimétrique L*a*b* et un fichier image L*a*b* est produit,
- dans lequel le fichier image L*a*b* est transféré de l'espace colorimétrique L*a*b* avec un profil de sortie dans un espace colorimétrique d'impression applicable à l'imprimante et un fichier image d'impression est produit,
- dans lequel le motif est imprimé par une imprimante avec au moins une tête d'impression sur la base du fichier image d'impression sur un matériau de support dans une grille de pixels, d'au moins une couleur d'impression, constituée de lignes s'étendant transversalement à la direction d'impression et de colonnes s'étendant dans la direction d'impression,
- dans lequel l'image d'impression, au moins par sections, est mesurée ligne par ligne dans la direction d'impression avec un système de mesure spectral optique avec une résolution spatiale de l'ordre de quelques pixels, en particulier avec une résolution spatiale d'un pixel, et un fichier image de mesure constitué de lignes et de colonnes est produit,
- dans lequel le fichier image de mesure est transféré dans un fichier image de mesure L*a*b*,
- dans lequel le fichier image de mesure L*a*b* est transféré avec le profil de sortie dans l'espace colorimétrique d'impression et un fichier image de comparaison est produit,
- dans lequel le fichier image de comparaison et un fichier image de référence prédéfini sont enregistrés l'un par rapport à l'autre,
- dans lequel un fichier image de différence est produit à partir du fichier image de comparaison et du fichier image de référence,
- dans lequel les valeurs de différence du fichier image de différence sont déterminées ligne par ligne et
- dans lequel ensuite, si les valeurs absolues des valeurs de différence dépassent une valeur de seuil prédéfinie, un dysfonctionnement de la tête d'impression associée aux pixels déviants est déterminé et
- dans lequel les étapes de procédé dans les opérations en ligne dans les opérations d'impression continues sont mises en œuvre sans interruption de l'impression.

2. Procédé selon la revendication 1,
- dans lequel un fichier image de référence est produit à partir du fichier image d'impression pour au moins une couleur d'impression.

3. Procédé selon la revendication 1,
- dans lequel un fichier image de référence est produit à partir d'un fichier image de comparaison précédent pour au moins une couleur d'impression.

4. Procédé selon l'une des revendications 1 à 3,
- dans lequel les valeurs de différence sont moyennées colonne par colonne sur un nombre prédéfini de lignes, de préférence en continu pendant le processus d'impression.

5. Procédé selon l'une des revendications 1 à 4,
- dans lequel des écarts de couleur dans l'espace colorimétrique L*a*b* inférieurs à ΔE00 = 1 sont détectables.

6. Procédé selon l'une des revendications 1 à 5,
- dans lequel l'au moins une tête d'impression de l'imprimante est actionnée par le biais du système de gestion des couleurs de sorte que les valeurs de différence dans le fichier image de différence soient minimisées.
